# EUROPÄISCHE PATENTANMELDUNG

(11) **EP 0 889 070 A2**
(43) Veröffentlichungstag der Anmeldung: **07.01.1999**
(21) Anmeldenummer: 98111502.5
(22) Anmeldetag: 23.06.1998
(51) Int. Cl.: C08G 18/79

(54) **Polyurethan-Isolierstege mit kleiner Wärmeleitzahl sowie die Verwendung von Isocyanurat aufweisenden Giessmassen zu deren Herstellung**

(30) Priorität: 05.07.1997 DE 19728794
(71) Anmelder: BAYER AG, 51368 Leverkusen (DE)
(72) Erfinder: Post, Udo, 51469 Bergisch Gladbach (DE); Avar, Geza, Dr., 51373 Leverkusen (DE)

(57) **Zusammenfassung**

Beschrieben werden für Metall-Verbundprofile geeignete Isolierstege mit einer Wärmeleitzahl ≤ 0,2 W/m·K aus einer Polyurethan-Gießmasse, wobei die Polyurethan-Gießmasse Isocyanurat-Gruppen besitzt und 10 bis 30 Gew.-%, bezogen auf die Gesamtmasse der Gießmasse, an Kunststoffhohlkugeln des Dichtebereichs 0,1 bis 0,30 g/cm³ mit einer mittleren Teilchengröße im Bereich von 5 bis 200 µm enthält.

Weiterhin wird die Verwendung von Kunststoffhohlkugeln der genannten Spezifikation enthaltenden Isocyanurat-Gruppen aufweisenden Gießmassen zur Herstellung von Isolierstegen beschrieben. Ein weiterer Gegenstand sind Metall-Verbundprofile, insbesondere für die Herstellung von Fenstern und Türen mit einem K-Wert ≤ 2,00 W/m²·K.

## Beschreibung

Die Erfindung betrifft Isolierstege für Metall-Verbundprofile, insbesondere für Aluminium-Verbundprofile für Fenster und Türen, sowie die Verwendung von expandierten thermoplastischen Polymer-Hohlkugeln als Füllstoffe enthaltenden Isocyanurat aufweisenden Gießmassen zu deren Herstellung.

Isolierstege werden zur Wärmedammung zwischen Metallprofilteilen eingesetzt, welche z.B. für Fenster oder Fassadenelemente verwendet werden.

Füllstofffreie, zu Polyurethanen ausreagierende Gießmassen werden dabei in erheblichem Umfang zur Herstellung dieser Isolierstegen für Metall-Verbundprofile, insbesondere Aluminium-Verbundprofile, wie sie beispielsweise im Fenster- und Türenbau eingesetzt werden, verwendet. Hierzu werden, wie beispielsweise in der DE-A 27 21 367 beschrieben, die Metallprofile über Rollenförderer endlos, Stoß an Stoß, mit einer stufenlos regelbaren Fertigungsgeschwindigkeit von ≤ 30 m/Minute unter zwei Rührwerksmischköpfen hindurchgeführt, aus denen das flüssige Reaktionsgemisch in die Profilisolierzone eingefüllt wird. Nach dem Aushärten des flüssigen Reaktionsgemisches werden die vorab zwischen den zu verbindenden Profilen angebrachte Hilfsprofile entfernt.

Die Anforderungen an den Isoliersteg sind u.a.:
- geringe Schwindung,
- kleiner α-Wert (thermischer Längenausdehnungskoeffizient)
- kleiner K-Wert (Wärmeleitfähigkeit)
- hohe Temperaturstabilität (z.B. für Pulverlackierung bei ca. 200°C)

Das vorstehende Anforderungsprofil wurde bisher durch den Zusatz von Füllstoffen, z.B. Glasfasern, Wollastonit, Schwerspat, Aluminiumhydroxid, u.a. in Polyisocyanurat/Polyisocyanurat-Gießmassen erreicht, wie z.B. in der DE 36 21 765, beschrieben.

Den heutigen Wärmeschutzanforderungen im Bauwesen, wie sie z.B. in der Bundesrepublik Deutschland in der 3. Wärmeschutzverordnung zum 01.01.95, für Metall-Verbundprofile der Rahmenmaterialgruppe 1 mit einem K-Wert ≤ 2,00 W/m²·k festgeschrieben werden, genügen die Isolierwerte (Wärmeleitfähigkeit) der bisherigen PU-Isolierstege nicht mehr im ausreichenden Maße.

Wünschenswert wären PU-Isolierstege für Metall-Verbundprofile, welche eine Wärmeleitzahl: ≤ 0,20 W/m·K aufweisen.

Es bestand daher die Aufgabe, PU-Isolierstege für Metall-Verbundprofile mit einer Wärmeleitfähigkeit ≤ 0,20 W/m·K bei wenigstens gleichbleibend kleiner Schwindung, α-Wert und hoher Temperaturstabilität zu entwickeln.

Überraschenderweise wurde jetzt gefunden, daß durch Verwendung bestimmter Kunststoff-Hohlkörper als Füllstoffe in den Gießmassen syntaktische Schäume mit Dichten < 1,0 g/cm³ erzeugt werden können, die dem vorgenannten Anforderungsprofil entsprechen.

Gegenstand der Erfindung sind daher für Metall-Verbundprofile geeignete Isolierstege mit einer Wärmeleitzahl ≤ 0,20 W/m·K aus einer Polyurethan-Gießmasse, wobei die Polyurethan-Gießmasse Isocyanurat-Gruppen besitzt 5-15 Gew.-%, bezogen auf die Gesamtmasse der Gießmasse, an Kunststoffhohlkugeln des Dichtebereichs 0,10 bis 0,30 g/cm³ mit einer mittleren Teilchengröße im Bereich von 5 bis 200 µm enthält.

Bei den Polyurethan-Gießmassen handelt es sich um flüssige Reaktionsgemische, die zu massiven oder geschäumten, Isocyanuratgruppen aufweisenden, vorzugsweise harten Polyurethankunststoffen ausreagierten. Es handelt sich um Gemische von organischen, vorzugsweise aromatischen Polyisocyanaten mit organischen Polyhydroxylverbindungen, wobei die Polyisocyanate, bezogen auf die Hydroxylgruppen, zur Herstellung von Isocyanurat-modifizierten Polyurethanen in überschüssigen Mengen zum Einsatz gelangen. Dies bedeutet, daß die Isocyanatkennzahl im allgemeinen innerhalb des Bereiches von 90 bis 2000, vorzugsweise 100 bis 1400 liegt. Unter 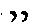 Isocyanatkennzahl" ist hierbei die Anzahl der Isocyanatgruppen der Polyisocyanatkomponente pro 100 Hydroxylgruppen der Polyhydroxylkomponente zu verstellen. Derartige Gießmassen, die zu Isocyanurat-modifizierten Polyurethanen ausreagieren, sind z.B. in der DE-A 25 34 247 beschrieben. Den Gießmassen können die üblichen Hilfs- und Zusatzmittel, d.h. Katalysatoren, wie Dimethylbenzylamin, Dibutylzinndilaurat oder permethyliertes Diethylentriamin, Katalysatoren für die Trimerisierung von Isocyanatgruppen der in DE-A 25 34 247 beschriebenen Art, gegebenenfalls weitere Füllstoffe wie beispielsweise Glasfasern, Aluminiumhydroxid, Talkum, Kreide, Dolomit, Glimmer, Schwerspat oder Wollastonit (CaSiO₃) zugesetzt werden.

Erfindungswesentlich ist, daß in den Gießmassen Kunststoffhohlkugeln in einer Menge von 5-15 %, vorzugsweise 7 bis 12 %, bezogen auf das Gesamtgewicht der Gießmasse, enthalten sind. Diese Kunststotffhohlkugeln besitzen eine Dichte im Bereich von 0,10 bis 0,30 g/cm³ und eine mittlere Teilchengröße von 5 bis 200 µm. Die Druckfestigkeit dieser Hohlkörper sollte bevorzugt größer 10 bar betragen. Derartige Hohlkörper sind beispielsweise unter der Bezeichnung DUALITE (Fa. Omega) im Handel erhältlich.

Ein weiterer Gegenstand der Erfindung ist die Verwendung von Isocyanurat-Gruppen aufweisenden Polyurethan-Gießmassen, die 5 bis 15 Gew.-%, bezogen auf die Gesamtmasse der Gießmasse, an Kunststoffhohlkugeln des Dichtebereichs 0,1 bis 0,30 g/cm³ mit einer mittleren Teilchengröße im Bereich von 50 bis 200 µm enthalten, zur Herstellung von Isolierstegen mit einer Wärmeleitzahl ≤ 0,20 W/m·K für den Einsatz in Metall-Verbundprofilen.

Die Kunststoffhohlkugeln können bei der Herstellung der Gießmasse entweder der Polyisocyanatkomponente oder der Polyhydroxylkomponente oder der vorab hergestellten Mischung dieser beiden Reaktionspartner zugesetzt werden.

Es ist überraschend, daß die Kombination einer Isocyanurat-Gruppen aufweisenden Polyurethan-Gießmasse mit Kunststoffhohlkugeln der angegebenen Spezifikation als Füllstoff in einer Menge von 5 bis 15 Gew.-% Isolierstege mit einer Wärmeleitzahl ≤ 0,20 W/m·K ergibt. In vorteilhafter Weise zeigen die erfindungsgemäßen Isolierstege eine sehr niedrige Schwindung bei einer hohen Temperaturstabilität.

Ein weiterer Gegenstand der Erfindung ist daher die Verwendung der erfindungsgemäßen Isolierstege in Metall-Verbundprofilen. Diese Metall-Verbundprofile weisen vorteilhaft einen K-Wert ≤ 2,00 W/m·K auf Vorzugsweise werden die erfindungsgemäßen Isolierstege daher in Metall-Verbundprofilen für Fenster, Türen und Fassadenelemente verwendet.

Die Herstellung der die erfindungsgemäßen Isolierstege enthaltenden Verbundprofile erfolgt in an sich bekannter Weise, beispielsweise gemäß der Verfahrensweise der DE-A 27 21 367. Die so hergestellten Verbundprofile weisen die vorteilhafte Eigenschaft auf, nach der 3. Wärmeschutzverordnung der Bundesrepublik Deutschland in die Rahmenmaterialgruppe 1 eingestuft zu sein.

Diese Verbundprofile werden insbesondere für die Herstellung von Fenstern und Türen eingesetzt. In vorteilhafter Weise weisen die erfindungsgemäßen Isolierstege hierbei eine Wärmeleitzahl von < 0,20 W/m·K, insbesondere von 0,120 bis 0,180 W/m·K auf.

Die folgenden Beispiele sollen die Erfindung näher erläutern, ohne sie jedoch in ihrem Umfang zu begrenzen.

### Beispiele

In den nachfolgenden Beispielen werden Reaktionsgemische, die zur Herstellung von Isolierstegen verwendet werden können, beschrieben.

### Allgemeine Herstellungsweise der Formteile

Die in den speziellen Beispielen aufgeführten Komponenten A und B werden im Falle, daß die Komponenten stark gashaltig sind, kurzzeitig bei Raumtemperatur bei ca. 20 Torr entgast, anderenfalls ohne weitere Vorbehandlung eingesetzt. Mit Hilfe eines 2-Komponenten-Dosiermischgerätes bzw. durch Einwiegen der angegebenen Gewichtsverhältnisse in einem Mischbehälter werden diese Komponenten dosiert, intensiv und sorgsam in der Weise vermischt, daß möglichst keine Luftblasen in das Reaktionsgemisch eingerührt werden und in ein geschlossenes Werkzeug eingefüllt. Die Herstellung des Reaktionsgemisches erfolgt hierbei vorzugsweise bei Raumtemperatur, während die Werkzeugtemperatur auf ca. 80°C temperiert ist und während des gesamten Herstellungsprozesses konstant gehalten wird. Nach ca. 3 bis 5 Minuten sind die Formteile im Werkzeug ausreichend durchgehärtet und können widerstandsfähig gegen plastische Verformung entnommen werden. Nach dem Abkühlen können sie sofort benutzt und nach ca. 24 Stunden geprüft werden.

### Beispiel 1

### Komponente A

100 Gew.-Teile eines Polyethers der OH-Zahl 36, der durch Addition eines Gemisches aus 83 % Propylenoxid und 17 % Ethylenoxid an Trimethylpropan erhalten worden ist, mit einer Viskosität von 800 mPas bei 25°C und 0,90 Gew.-Teile einer Lösung von Alkaliacetat in Diethylenglykol werden zur Komponente A vermischt.

### Komponente B

150 Gew.-Teile eines Polyisocyanat-Gemisches mit einem NCO-Gehalt von 28 % und einer Viskosität bei 25°C von 300 mPas, bestehend aus 100 Gew.-Teilen eines Semi-Prepolymers, welches durch Umsetzung von (i) 100 Gew.-Teilen eines Gemisches aus 80 Gew.-Teilen 4,4'-Diisocyanatodiphenylmethan, 10 Gew.-Teilen 2,4'-Diisocyanatodi-phenylmethan und 10 Gew.-Teilen tri- und höherfunktionellen Polyisocyanaten der Diphenylmethanreihe mit (ii) 12,5 Gew.-Teilen Polypropylenglykol der OH-Zahl 485 erhalten wurde, mit einem NCO-Gehalt von 24,5 % und 100 Gew.-Teilen eines Polyisocyanates, das durch Phosgenierung von Anilin-Formaldehyd-Kondensaten hergestellt wurde und einem NCO-Gehalt von 31,5 % und eine Viskosität bei 25°C von 60 mPas aufweist.

Der Werkstoff aus Beispiel 1 weist u.a. folgende Eigenschaften auf:

| | |
|---|---|
| Dichte | 1,18 g/cm³ |
| Wärmeleitzahl | 0,220 W/m·K |
| Wärmeformbeständigkeit | 210°C |
| Schwindung | 1,60 % |

### Beispiel 2

### Komponente A

100 Gew.-Teile eines Polyethers der OH-Zahl 36, der durch Addition eines Gemisches aus 83% Propylenoxid und 17% Ethylenoxid an Trimethylolpropan erhalten worden ist, mit einer Viskosität von 800 mPa·s bei 25°C, 0,90 Gew.-Teilen einer Lösung von Alkaliacetat in Diethylenglykol werden mit 1,0 Gew.-Teilen Zeolith und 15 Gew.-Teilen DUALITE/Type M 6032 AE zur Komponente A vermischt.

### Komponente B

150 Gew.-Teile eines Polyisocyanat-Gemisches mit einem NCO-Gehalt von 28% und einer Viskosität bei 25°C von 300 mPa·s, bestehend aus 100 Gew.-Teilen eines Semi-Prepolymers, welches durch Umsetzung von (i) 100 Gew.-Teilen eines Gemisches aus 80 Gew.-Teilen 4,4'-Diisocyanatodiphenylmethan, 10 Gew.-Teilen 2,4'-Diisocyanatodiphenylmethan und 10 Gew.-Teilen tri- und höherfunktionellen Polyisocyanaten der Diphenylmethanreihe mit (ii) 12,5 Gew.-Tlen Polypropylenglykol der OH-Zahl 485 erhalten wurde, mit einem NCO-Gehalt von 24,5% und 100 Gew.-Teilen eines Polyisocyanates, das durch Phosgenierung von Anilin-Formaldehyd-Kondensaten hergestellt wurde und einem NCO-Gehalt von 31,5% und eine Viskosität bei 25°C von 60 mPa·s aufweist, 1,5 Gew.-Teilen Zeolith und 20 Gewalten DUALITE/Type M 6032 AE werden zur Komponente B vermischt.

Der Werkstoff aus Beispiel 2 weist u.a. folgende Eigenschaften auf:

| | |
|---|---|
| Dichte | 0,680 g/cm³ |
| Wärmeleitzahl | 0,135 W/m·K |
| Wärmeformbeständigkeit | 180°C |
| Schwindung | 0,55 |

### Beispiel 3

### Komponente A

100 Gew.-Teile eines Polyethers der OH-Zahl 36, der durch Addition eines Gemisches aus 83% Propylenoxid und 17% Ethylenoxid an Trimethylolpropan erhalten worden ist, mit einer Viskosität von 800 mPa·s bei 25°C, 0,90 Gew.-Teilen einer Lösung von Alkaliacetat in Diethylenglykol, 1,0 Gew.-Teilen Zeolith und 15 Gew.-Teilen DUALITE/Type M 6032 AE werden zur Komponente A vermischt.

### Komponente B

150 Gew.-Teile eines Polyisocyanates, das durch Phosgenierung von Anilin-Formaldehyd-Kondensaten hergestellt wurde, einem NCO-Gehalt von 31,5% und eine Viskosität bei 25°C von 60 mPa·s aufweist, 1,5 Gew.-Tlen Zeolith und 20 Gew.-Teilen DUALITE/Type M 6032 AE werden zur Komponente B vermischt.

Der Werkstoff aus Beispiel 3 weist u.a. folgende Eigenschaften auf:

| | |
|---|---|
| Dichte | 0,70 g/cm³ |
| Wärmeleitzahl | 0,142 W/m·K |
| Wärmeformbeständigkeit | 215°C |
| Schwindung | 0,70 % |

## Patentansprüche

1. Für Metall-Verbundprofile geeignete Isolierstege mit einer Wärmeleitzahl ≤ 0,2 W/m·K aus einer Polyurethan-Gießmasse, dadurch gekennzeichnet, daß die Polyurethan-Gießmasse Isocyanurat-Gruppen besitzt und 5 bis 15 Gew.-%, bezogen auf die Gesamtmasse der Gießmasse, an Kunststoffhohlkugeln des Dichtebereichs 0,1 bis 0,30 g/cm³, mit einer mittleren Teilchengröße im Bereich von 5 bis 200 µm enthält.

2. Isolierstege nach Anspruch 1, dadurch gekennzeichnet, daß die Kunststoffglashohlkugeln eine Dichte von 0,13 g/cm³, eine mittlere Teilchengröße von 110 µm, eine Wärmeleitzahl 0,04 W/m·K und eine Druckfestigkeit > 10 bar besitzen.

3. Isolierstege nach einem der Ansprüche 1 bis 2, dadurch gekennzeichnet, daß das Gewichtsverhältnis der Gießmasse zu den Kunststoffhohlkugeln 87:13 und das Volumenverhältnis 43:57 beträgt.

4. Isolierstege nach einem der Ansprüche 1 bis 3, dadurch gekennzeichnet, daß die Isolierstege eine Wärmeleitzahl im Bereich von 0,12 bis 0,18 W/m·K aufweisen.

5. Verwendung von Isocyanurat-Gruppen aufweisenden Polyurethan-Gießmassen, die 10 bis 30 Gew.-%, bezogen auf die Gesamtmasse der Gießmasse, an Kunststoffhohlkugeln des Dichtebereichs bis g/cm³, mit einer mittleren Teilchengröße im Bereich von bis µm enthalten, zur Herstellung von Isolierstegen mit einer Wärmeleitzahl ≤ 0,20 W/m·K.

6. Verwendung von Isolierstegen gemäß einem der Ansprüche 1 bis 4 in Metall-Verbundprofilen.
